# EUROPEAN PATENT SPECIFICATION

(11) **EP 3 898 710 B1**
(45) Date of publication and mention of the grant of the patent: **04.11.2026**
(21) Application number: 19829039.7
(22) Date of filing: 12.12.2019
(51) Int. Cl.: C08F 2/32, C08F 4/04, C08F 220/56

(54) **METHOD FOR MANUFACTURING OF STABLE INVERSE POLYMER EMULSION AND USE THEREOF**
VERFAHREN ZUR HERSTELLUNG EINER STABILEN INVERSEN POLYMEREMULSION UND DEREN VERWENDUNG
PROCÉDÉ DE FABRICATION D'UNE ÉMULSION DE POLYMÈRE INVERSE STABLE ET UTILISATION ASSOCIÉE

(30) Priority: 21.12.2018 EP 18215201
(43) Date of publication of application: 27.10.2021
(73) Proprietor: TouGas Holding GmbH, 60314 Frankfurt (DE)
(72) Inventor: DUGONJIC-BILIC, Fatima, 63075 Offenbach (DE); NEUBER, Marita, 63303 Dreieich (DE)
(74) Representative: Dörr, Klaus
(86) International application number: PCT/EP2019/084905
(87) International publication number: WO 2020/126824

(56) References cited:
- WO-A1-2017/211563
- US-A1- 2001 051 686
- US-A1- 2001 051 686
- US-A1- 2004 260 017
- SEPPIC S.A.: "Simulsol SL8 Datasheet", 21 November 2018 (2018-11-21), pages 1 - 4, XP055675240, Retrieved from the Internet <URL:https://www.seppic.com/sites/seppic/files/2018/11/21/tds_simulsol_sl_8_2017.pdf> [retrieved on 20200310]

## Description

The present invention relates to a method to manufacture stable water-in-oil polymer emulsion with low viscosity by using special stabilizing surfactant package.

Water-in-oil emulsions, which are also called inverse emulsions, are useful delivery systems for water-soluble synthetic polymers such as polyacrylamides, polyacrylates or copolymers of acrylamide with other water-soluble monomers. These polymer emulsions are useful in commercial applications such as cosmetics, cleaning, wastewater treatment, papermaking and enhanced oil recovery.

The use of water-soluble polymers as inverse emulsions has several advantages compared to polymers in powder form:
i. The emulsion is liquid and can be pumped and easily metered
ii. The inversion of the emulsion is fast and dissolution of the polymer is not time consuming and does not require equipment for maturation
iii. There is no risk of dust formation during handling
iv. The polymer dissolves homogeneously without risk to form gel-like particles

Water-in-oil polymer emulsions are liquids. The aqueous phase containing the water-soluble polymer is finely dispersed in an organic oil phase not miscible with the water phase. The water droplets are stabilized by suitable surfactant or surfactant mixtures, also called emulsifier or emulsifier mixtures. Under stirring and/or in the presence of suitable surfactant, the polymer is released from the micelles and forms the desired polymer solution.

It is obvious that the stability of the polymer emulsion is an important objective for every industrial use. The water droplets should not settle during transport and storage to ensure a homogenous polymer concentration in the containers or tanks without the need for redispersing the emulsion before use. This objective arose already shortly after introduction of water-in-oil emulsions. For example, US 3,826,771 claims to provide an emulsion which has a high degree of stability with an aqueous phase content of at least 75 % and a high polymer content between 20 and 50 %, based on the emulsion. In US 3,826,771, stability is defined as the ability to maintain the dispersion of the polymer particles throughout the emulsion for a period of 3 weeks at which time the dispersion can be reformed with only slight agitation.

As the polymer emulsion is a liquid, it can be pumped and easily metered into water or an aqueous fluid, which is a great advantage compared to polymers in powder form.

For easy handling, typically the viscosity of the water-in-oil emulsion should not be higher than about 2000 cP (see US 5,376,713, viscosity measured using Brookfield LVT, Spindel 2, 12 rpm), otherwise it becomes difficult to pump the emulsion as is pointed out for example in US 5,376,713. The patents states that viscosities of less than 1000 cP measured by Brookfield viscometer are important. It describes the impact of surfactants packages consisting of N,N-diethanol oleic acid amide with other surfactants of different type on the viscosity and stability of polymer emulsions. The oleic acid amide alone is not efficient. Furthermore, it is toxic for aquatic life with long-lasting effects.

To stabilize aqueous droplets in inverse emulsions, typically oil-soluble surfactants are used according to Bancroft's rule which states that the fluid with higher solubility for the surfactant forms the continuous phase. Lipophilic surfactants suitable for inverse emulsions are non-ionic and characterized by a HLB-value between 3 and 8, see Römpp Chemielexikon 9th ed., 1990.

HLB-value means the hydrophilic-lipophilic balance of a surfactant and is a measure of the degree to which it is hydrophilic or lipophilic, determined by calculating values for the different regions of the molecule. The most common method was developed by W. C. Griffin in 1949 and results in a ranking of the surfactants between 0 and 20 with 0 corresponds to a completely lipophilic/hydrophobic molecule, and a value of 20 corresponds to a completely hydrophilic/lipophobic molecule. The HLB-values of the surfactants specified by the suppliers according to that method were used in the present invitation.

The stabilizing surfactant molecules cover the surface of the water droplets and keep them at distance by steric repulsion that they cannot coalesce to larger droplets, which more easily separate from the organic phase. As high molecular weight surfactants require large volume, they often stabilize water-in-oil emulsions very efficiently, see for example Landfester and Musyanovych, Adv. Polym Sci (2010), 234, 39-63 who found that nonionic block copolymer stabilizers like poly(ethylene-co-butylene)-b-poly(ethylene oxide) are the most efficient.

Also, mixtures of surfactants are used as emulsifier for water-in-oil emulsions. When the HLB-values of the individual surfactants are different from each other, the overall HLB-value of the mixture corresponds to the weighted average of the single compounds.

There is a broad variety of different surfactant classes described in the literature as emulsifiers for inverse emulsions.

US 4,021,399 describes the use of sorbitan monostearate as emulsifier for water-in-oil polymerization of an acrylamide/acrylic acid copolymer. US 4,078,133 uses sorbitan-monostearate as well as sorbitan-monoloeat to produce vinyl-polymers in inverse emulsion polymerization.

US 5,290,479 describes the use of a surfactant blend consisting of sorbitan fatty acid ester or fatty acid glyceride, a polyethoxylated of sorbitol fatty acid ester and a polyethoxylated alcohol. The surfactant mixture is adjusted to an HLB of 7 to 9 to ensure the highest emulsion stability and viscosity of polymer solution. The findings of US 5,290,479 indicate that the emulsifiers have an impact on the resulting polymers and their properties.

In contrast, US 5,376,713 teaches that sorbitan ester ethylenoxide adducts as co surfactants lead to reduced stability and induces higher bulk viscosity. It claims the use of a surfactant mixture consisting of N,N-diethanol oleic acid amide and a sorbitan-free ethylene oxide adduct of a long chain compound bearing OH- an/or carboxylic groups and having a HLB between 5 and 14.

US 2016/0032170 claims a method for increasing recovery of crude oil using a water-soluble crosslinked polymer prepared in an emulsion, the organic phase containing high molecular weight structured multi-ester or multi-ether of a polyol with a molecular weight from 950 Daltons to about 500000 Daltons. Besides other surfactant classes, the patent includes alkylated alkyl polyglycosides and alkoxylated polyglycosides as high molecular weight structured multi-ethers of a polyol dissolved in the organic phase.

Surprisingly it was found that a combination of a first surfactant having an HLB-value between 3 and 9 with second surfactant having an HLB-value of greater than 11, said second surfactant being an alkyl polyglycoside or a mixture of alkyl polyglycosides, gives rise to stable water-in-oil polymer emulsions with low viscosity.

### Detailed Description

Therefore, the present invention relates to a method as defined in independent claim 1 and further described in claims 2 to 13 giving rise to stable water-in-oil polymer emulsions with low viscosity.

A further aspect relates to water-in-oil polymer emulsions obtained by the instant method. Such water-in-oil polymer emulsions are very stable and have a low viscosity. The term "low viscosity" as used in the instant invention refers to polymer emulsion as used herein having a viscosity of less than 1000 mPas measured using Brookfield DV-I viscometer with spindle 2 at 12 rpm at a temperature of 30 °C.

### Polymers and Aqueous Phase

According to the instant invention, the water-soluble polymer is a synthetic polymer, in particular such synthetic polymers are polymers, copolymers or terpolymers based on polyacrylamide and/or its derivatives.

Preferably, the synthetic polymer used in the instant invention is a synthetic polymer comprising:
(I) at least structural units of formula (I) 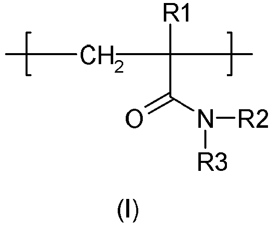 wherein
   - R1, R2 and R3: independently are hydrogen or C₁-C₆-alkyl,
(II) from 0 to 95 % by weight structural units of formula (II) 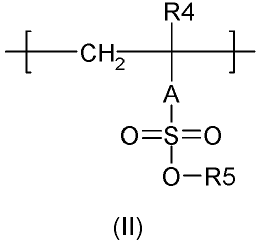 wherein
   - R4: is hydrogen or C₁-C₆-alkyl,
   - R5: is hydrogen, a cation of an alkaline metal, of an earth alkaline metal, of ammonia and/or of an organic amine,
   - A: is a covalent C-S bond or a two-valent organic bridging group,
(III) from 0 to 30 % by weight structural units of formula (III) 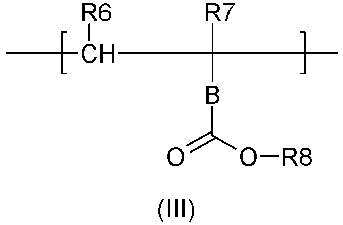 wherein
   - B: is a covalent C-C bond or a two-valent organic bridging group
   - R6 and R7: are independently of one another hydrogen, C₁-C₆-alkyl, -COOR₉ or -CH₂-COOR₉, with R₉ being hydrogen, a cation of an alkaline metal, of an earth alkaline metal, of ammonia and/or of an organic amine,
   - R8: is hydrogen, a cation of an alkaline metal, of an earth alkaline metal, of ammonia and/or of an organic amine, or is C₁-C₆-alkyl, a group -CₙH₂ₙ-OH with n being an integer between 2 and 6, preferably 2, or is a group -CₒH₂ₒ-NR10R11, with o being an integer between 2 and 6, preferably 2, and
   - R10 and R11: are independently of one another hydrogen or C₁-C₆-alkyl, preferably hydrogen,
(IV) from 0 to 50 % by weight structural units of formula (IV) 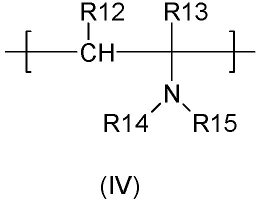 wherein
   - R12 and R13: are independently of one another hydrogen, C₁-C₆-alkyl, -COOR16 or -CH₂-COOR16, with
   - R16: being hydrogen, a cation of an alkaline metal, of an earth alkaline metal, of ammonia and/or of an organic amine,
   - R14: is hydrogen or, C₁-C₆-alkyl, and
   - R15: is -COH, -CO-C₁-C₆-alkyl or
   - R14 and R15: together with the nitrogen atom to which they are attached form a heterocyclic group with 4 to 6 ring atoms, preferably a pyridine ring, a pyrrolidone ring or a caprolactame ring,
(V) from 0 to 20 % by weight structural units of formula (V) 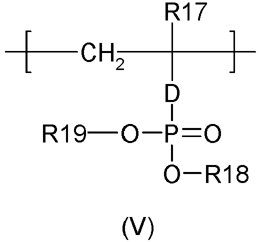 wherein
   - D: is a covalent C-P bond or a two-valent organic bridging group
   - R17: is hydrogen or, C₁-C₆-alkyl, and
   - R18 and R19: are independently of one another hydrogen, a cation of an alkaline metal, of an earth alkaline metal, of ammonia and/or of an organic amine,
   - B: is a covalent C-P bond or a two-valent organic bridging group,
(VI) optionally further copolymerisable monomers, such copolymerisable monomers being present from 0 to 20 % by weight structural units,
with the proviso that the percentage of the structural units of formulae (I) to (VI), preferably the structural units of formulae (I) to (V), refer to the total mass of the copolymer and the percentage of the structural units of formulae (I) to (VI), preferably the structural units of formulae (I) to (V), amounts to 100%.

The C₁-C₆-alkyl groups being present in the above formulae (I) to (V) are independently of each other and may be straight chain or branched. Examples of alkyl groups are methyl, ethyl, n-propyl, iso-propyl, n-butyl, sec.-butyl, tert.-butyl, n-pentyl or n-hexyl. Ethyl and especially methyl are preferred.

The group A may be a C-S-covalent bond or a two-valent organic group. Examples thereof are C1-C6-alkylene groups or -CO-C1-C6-alkylene groups. The alkylene groups may be straight chain or branched. Examples of A groups are -CpH2p-groups or -CO-NH-CpH2p- groups, with p being an integer between 1 and 6. -CO-NH-C(CH3)2-CH2- or a C-S-covalent bond is a preferred group A.

The group B in formula (III) may be a C-C-covalent bond or a two-valent organic group. Examples thereof are C1-C6-alkylene groups. These groups may be straight chain or branched. Examples of alkylene groups are -CqH2q- groups, with q being an integer between 1 and 6. Methylene or a C-C-covalent bond is a preferred group B.

The group D in formula (V) may be a C-P-covalent bond or a two-valent organic group. Examples thereof are C1-C6-alkylene groups. These groups may be straight chain or branched. Examples of alkylene groups are -CqH2q- groups, with q being an integer between 1 and 6. Methylene or a C-P-covalent bond is a preferred group D.

The structural units of formula (I) are derived from an ethylenically unsaturated carboxylic acid amide selected from the group of acrylamide, methacrylamide and/or their N-C1-C6-alkyl derivatives or N,N-C1-C6-dialkyl derivatives.

The polymer used in the instant invention may further contain crosslinking monomers, which are monomers with more than one ethylenically unsaturated group. Different compound classes can be used, such as bis-amides, e.g. methylene-bis-acrylamide, bis-, tris- or tetraether derived from two-, three- or fourvalent alcohols and from ethylenically unsaturated halides e.g. trimethylolpropane diallylether, pentaerithriol-triallylether and tetrallyloxyethane, or esters of ethylenically unsaturated carboxylic acids with multivalent alcohol, e.g. di-, tri-, or tetraacrylates derived from ethyleneglycol, from trimethylolpropanol or from pentaerythrite, or di-, tri-, or polyamines which are substituted at the nitrogen atom with ethylenically unsaturated residues, such as N,N'-diallyl-ethylenediamine or triallylamine.

Crosslinker monomers, if present, typically are used in amounts between 0.01 and 5 % by weight, preferably between 0.05 and 1 % by weight, referring to the total amount of monomers used.

Preferred polymers used in the instant invention further contain structural units of formula (II) to (V) which are derived from an ethylenically unsaturated sulfonic acid and/or its alkaline metal salts and /or their ammonium salts, and/or an ethylenically unsaturated phosphonic acid and/or its alkaline metal salts and /or their ammonium salts, optionally together with further copolymerisable monomers.

Other preferred copolymers used in the instant invention are those, wherein B is a C-P covalent bond or a -CqH2q- group with q being an integer between 1 and 6, preferably 1, and/or wherein A is a C-S covalent bond or a -CO-NH-CpH2p-group with p being an integer between 1 and 6, preferably between 2 and 4, B being most preferably a group -CO-NH-C(CH3)2-CH2-.

Also, preferably applied are copolymers with structural units of the formula (II) derived from vinylsulfonic acid, 2-acrylamido-2-methylpropane sulfonic acid, 2-methacrylamido-2-methylpropane sulfonic acid, styrene sulfonic acid and/or their alkaline metal salts and/or their ammonium salts. Especially preferred are structural units of the formula (II) derived from vinylsulfonic acid and/or 2-acrylamido-2-methylpropane sulfonic acid and/or from their alkaline metal salts and/or from their ammonium salts.

The ethylenically unsaturated carboxylic acids of the formula (III) are preferably acrylic acid, methacrylic acid, fumaric acid, maleic acid, itaconic acid and/or crotonic acid as well as their alkaline metal salts and/or their ammonium salts. The alkylesters of ethylenically unsaturated carboxylic acids are preferably alkylesters of acrylic acid, methacrylic acid, fumaric acid, maleic acid, itaconic acid and/or crotonic acid. Especially preferred are alkylesters with 1 to 6 carbon atoms.

The oxyalkylesters of an ethylenically unsaturated carboxylic acids of the formula (III) are preferably 2-hydroxyethylester of acrylic acid, methacrylic acid, fumaric acid, maleic acid, itaconic acid and/or crotonic acid.

The ester of ethylenically unsaturated carboxylic acid of the formula (III) with N-dialkylalkanolamine is preferably N,N-dimethylethanolamine methacrylate, its salt or quaternary ammonium product.

Further preferably applied copolymers with structural units of the formula (IV) are derived from N-vinylamides. The N-vinylamide is preferably N-vinylformamide, N-vinylacetamide, N-vinyl-N-methylacetamide, or N-vinylamide comprising cyclic N-vinylamide groups, preferably derived from N-vinylpyrrolidone, N-vinylcaprolactame or N-vinylpyridine.

Preferably applied are copolymers with structural units of the formula (V) are derived from vinylphosphonic acid and/or its alkaline metal salts and/or its ammonium salts, and/or allylphosphonic acid and/or its alkaline metal salts and/or its ammonium salts. Preferred copolymers used in the instant invention are those, wherein R1, R2, R3, R4, R10, R11, R14, and R17 are independently of one another hydrogen or methyl or wherein R5, R9, R16, R18 and R19 are independently of one another hydrogen or a cation of an alkali metal, of an earth alkaline metal, of ammonia or of an organic amine.

Still other preferred copolymers used in the instant invention are those, wherein R6 and R12 is hydrogen and R7 and R13is hydrogen or methyl, or wherein R6 is - COOR9 and R7 is hydrogen or wherein R6 is hydrogen and R7 is -CH2-COOR9 or wherein R12 is hydrogen and R13 is hydrogen or methyl, or wherein R12 is - COOR16 and R13 is hydrogen or wherein R12 is hydrogen and R13 is -CH2-COOR16.

In particular, preferred are water soluble synthetic copolymers material which are selected from the group consisting of polymers containing:
(I) 10 to 90 % by weight of structural formula I, preferred from 20 to 70 % by weight,
(II) 0 to 95 % by weight of structural formula II, preferred from 10 to 80 % by weight, more preferred from 20 to 60 % by weight,
(III) 0 to 30 % by weight of structural formula III, preferred from 0 to 20 % by weight, more preferred 0.1 to 1% by weight,
(IV) 0 to 50 % by weight of structural formula IV, preferred from 0 to 20 % by weight, more preferred from 0.1 to 10 % by weight,
(V) 0 to 20 % by weight of structural formula V, preferred from 0.1 to 10 % by weight,
referred to the total mass of the polymer, with the proviso that the percentage of the structural units of formulae (I) to (V) refer to the total mass of the copolymer and the percentage of the structural units of formulae (I) to (V) amounts to 100 %.

According to the instant invention, the water-soluble polymer is a synthetic polymer, in particular such synthetic polymers are polymers, copolymers or terpolymers based on polyacrylamide and/or its derivatives.

The synthetic polymer, in particular the synthetic copolymers and/or terpolymers according the present invention are water-soluble polymers. The term "water-soluble" as used herein means that at a concentration of at least 0.05 wt.-% the polymer is completely soluble in distilled water at 30 °C. Complete dissolution as used herein means that the polymer solution visually does not exhibit particles, streaks or flocks.

The synthetic polymer, in particular the synthetic copolymers and/or terpolymers according the present invention are not only water-soluble polymers, they further have a high molecular weight. Thus, the average molecular weight of the synthetic polymer, in particular the synthetic copolymers and/or terpolymers according the present invention is higher than 1,000,000 Dalton, preferably higher than 3,000,000 Dalton.

The average molecular weight can be determined via gel permeation chromatography (GPC). Commercially available polymers, e.g. from acrylamide with molecular weight of 1,140,000 Dalton and 5,550,000 Dalton, can be used as standards. For separation of the sample, a column consisting of a polyhydroxymethacrylate copolymer network with a pore volume of 30,000 Angstrom (Å) can be used.

The molecular weight of the copolymers according to the present invention have preferably a number-average molecular weight of more than 1 X 10⁶ g/mol.

The K-value according to Fikentscher serves as indicator for the average molecular weight of the copolymers according to the invention. To determine the K-value, the copolymer is dissolved in a certain concentration (generally 0.5 wt.-%, in the instant invention 0.1 wt.-%) and the efflux time at 30 °C is determined by means of an Ubbelohde capillary viscometer. This value gives the absolute viscosity of the solution (η_{c}). The absolute viscosity of the solvent is ηₒ. The ratio of the two absolute viscosities gives the relative viscosity nᵣₑₗ ${η}_{rel} = {η}_{c} / {η}_{o}$

From the relative viscosity, the K-value can be determined as a function of the concentration c by means of the following equations: $Log {η}_{rel} = \left[\left({75 k}^{2}/\left(1+1.5kc\right)+k\right.\right] c$ $k = K / 1000$

The K-value of the synthetic polymer, in particular the synthetic copolymers and/or terpolymers, is higher than 180 determined as 0.1 wt.-% copolymer concentration in deionized water, preferably is higher than 200.

The synthetic polymer, in particular the synthetic copolymers and/or terpolymers, content of the water-in-oil emulsion is typically from 20 to 50 wt.-%, preferred between 25 to 35 wt.-%, related to the emulsion.

The synthetic polymer, preferably the copolymer or terpolymer, is dissolved in the aqueous phase that is finely dispersed in the organic, hydrophobic phase, typically, the size of the aqueous droplet is less than 1 µm, preferred less than 500 nm, in accordance with Arshady, Colloid Polym Sci 270 (1992) 717-732 "Suspension, emulsion, and dispersion polymerization: A methodological survey". Most preferred are droplets having a size of less than 300 nm, in particular within the range from 50 to 250 nm.

The water present in the water-in-oil polymer emulsions generally includes freshwater, but saltwater or combinations with saltwater also may be used. Generally, the water used may be from any source, provided that it does not contain an excess of compounds that may adversely affect other components in the water-in-oil polymer emulsion. Especially, easily soluble inorganic or organic salts like alkali metal and/or ammonium halides, acetates, formats and/or hydroxides may be dissolved in the water.

In some embodiments, the water may be present in the water-in-oil polymer emulsion in an amount in the range of from about 20 wt.-% to about 50 wt.-% of the emulsion.

The aqueous phase, that means the water including the synthetic polymer, preferably the copolymer or terpolymer, typically accounts for 40 to 90 wt.-%, preferred 60 to 75 wt.-%, related to the emulsion.

### Emulsifier and Organic, Hydrophobic Phase

Suitable water-immiscible liquids may include, but are not limited to, water-immiscible solvents, such as paraffin hydrocarbons, naphthene hydrocarbons, aromatic hydrocarbons, and mixtures thereof. The paraffin hydrocarbons may be saturated, linear, or branched paraffin hydrocarbons. Examples of suitable aromatic hydrocarbons include, but are not limited to, toluene and xylene. The water-immiscible liquid may be present in the water-in-oil polymer emulsion in an amount sufficient to form a stable emulsion. In some embodiments, the water-immiscible liquid may be present in the water-in-oil polymer emulsions in an amount in the range from about 10 wt.-% to about 50 wt.-%.

Surfactants should be present in the water-in-oil polymer emulsion, among other things, to stabilize the aqueous phase droplets against coalescence and to prevent separation from the organic hydrophobic phase.

According to the instant invention, the surfactant package for the water-in-oil emulsion consists of at least of a first surfactant having a HLB-value between 3 and 9 and a second surfactant being an alkyl polyglycoside or a mixture of alkyl polyglycoside having a HLB-value of greater than 11.

The aforementioned alkyl polyglycosides are considered being environmentally friendly materials.

The first surfactant may be a single surfactant or a mixture of surfactants having a HLB-value between 3 and 9 and being able to form water-in-oil emulsions. That first surfactant may include, but is not limited to fatty acids, fatty acid esters, alcohols., ethers, alkoxylated alcohols, alkylated polyols, alkoxylated polyols, polyol esters, alkoxylated polyol esters, alkylates amine, alkoylated amines, alkylated amides, alkoxylates amides, alkylated sulphur-containing compounds, alkoxylated sulphur-containing compounds, alkylated phosphorous-containing compounds, alkoxylated phosphorous-containing compounds.

Preferred surfactants are sorbitan fatty acid esters and alkoxylated sorbitan fatty acid esters, most preferred are sorbitan monooleat and sorbitan dioleat and mixtures hereof.

The second surfactant is an alkyl polyglycoside or a mixture of alkyl polyglycosides, all of them having an HLB-value of greater than 11 and preferably exhibiting a molecular weight of less than 950 g/mol. Suitable low molecular weight alkyl polyglycosides according to the invention consist of one to 5 glycoside units. Depending on the fatty alcohol used for the synthesis, the side chain consists of alkyl groups with an uniform number of up to 12 C-atoms or a mixture of alkyl groups of different length with up to 16 C-atoms. Preferred alkyl polyglycosides are octyl - to dodecyl polyglucosides having 1 to 3 glucoside units and mixtures thereof.

In particular preferred are alkyl polyglycoside(s) which consist of 1 to 5 glycoside units, preferred of 1 to 3 glycoside units, most preferred 1 or 2 glycoside units.

In particular preferred are alkyl polyglycoside(s) having an alkyl side chain which consists of alkyl groups with an uniform number of up to 12 C-atoms or different length with up to 16 C-atoms.

Most preferred are alkyl polyglycoside(s) in which the alkyl polyglycoside(s) are octyl - to dodecyl polyglucosides having 1 to 3 glucoside units and mixtures thereof.

Alkyl polyglycosides are synthesized from saccharides and fatty alcohols, both of them are renewable raw materials. They are non-toxic and characterized by good tolerance for eyes, skin and mucous membranes. Furthermore, they distinguish themselves by advantageous environmental properties like complete biodegradability under aeorbic as well as under anaerobic conditions.

That is why alkyl polyglycosides are often used for formulations for cosmetic and household products.

In general, alkyl polyglycosides are very stable against hydrolysis in contrast to other surfactants like e.g. sulfates. Furthermore, they are compatible with water of high salinity and high hardness. This allows to use them for a variety of recipes even under sever conditions.

The first and the second surfactant should be present in an amount sufficient to provide the desired stable water-in-oil polymer emulsion. In some embodiments, the first surfactant may be present in an amount in the range of from about 0.5 wt.-% to about 6 wt.-% of the emulsion, the second surfactant may be present in an amount in the range of from about 0.1 wt.-% to about 4 wt.-% of the emulsion, the ratio of the first and the second surfactant may vary between 0.5 to 1 and 8 to 1, preferably between 1 to 1 and 4 to 1. Typically, the total amount of first and second surfactant ranges from 0.6 to 10 wt.-%, preferably from 1 to 9 wt.-%.

In an embodiment, the first and the second surfactant are different in chemical structure, more preferably the first surfactant does not include alkyl polyglycoside or a mixture of alkyl polyglycosides.

### Salt, Inverter Surfactant

In some embodiments, the water in oil polymer emulsions further may comprise a salt. Among other things, the salt may be present, among other things, to add stability to the emulsion and/or reduce the viscosity of the emulsion. Examples of suitable salts, include, but are not limited to, ammonium chloride, potassium chloride, sodium chloride, ammonium sulfate, and mixtures thereof. In some embodiments, the salt may be present in the water-in-oil polymer emulsions in an amount in the range of from about 0.5 wt.-% to about 2.5 wt.-% of the emulsion.

In some embodiments, the water in oil polymer emulsions further may comprise an inverter. Among other things, the inverter may facilitate the inverting of the emulsion upon addition to the aqueous treatment fluids of the present invention. Upon addition to the aqueous treatment fluid, the emulsion should invert, releasing the copolymer into the aqueous treatment fluid. Examples of suitable inverters include, but are not limited to, ethoxylated and/or propoxylated alcohols, nonionic surfactant with an HLB of from 12 to 14, and mixtures thereof. The inverter should be present in an amount sufficient to provide the desired inversion of the emulsion upon contact with the water in the aqueous treatment fluid. In some embodiments, the inhibitor may be present in an amount in the range of from about 0.5 wt.-% to about 10 wt.-% by weight of the emulsion.

### Inverse Emulsion Polymerization

Inverse emulsion polymerization is used to prepare a suitable water-in-oil polymer emulsion. Suitable emulsion polymerization techniques may have a variety of different initiation temperatures depending on, among other things, the amount and type of initiator used, the amount and type of monomers used, and a number of other factors known to those of ordinary skill in the art. The inverse emulsion polymerization includes the following steps
(i) preparation of an aqueous monomer solution, if necessary, adjusting pH value of the aforementioned monomer solution,
(ii) preparation of an organic solution consisting of a water-immiscible organic liquid that does not interfere with the polymerization reaction, said organic solution containing a surfactant package,
(iii) addition of the aqueous phase of step (i) to the organic phase of Step (ii) to prepare a water-in-oil emulsion,
(iv) removal of oxygen and initiation of the polymerization reaction by addition of one or more compounds that form radicals
(v) adjusting reaction temperature by cooling or heating to allow complete conversion of the monomers into a polymer,
(vi) optionally addition of an inverter surfactant for facilitated inversion or further additives,
wherein
the water-in-oil polymer emulsions comprises at least one water-soluble polymer in the aqueous phase, the aqueous phase is dispersed in the continuous hydrophobic organic phase and the droplets of the aqueous phase are stabilized by a surfactant package containing a first surfactant having a HLB-value between 3 and 9 and a second surfactant having a HLB-value of greater than 11, said second surfactant is an alkyl polyglycoside or a mixture of alkyl polyglycosides, the water-soluble polymer is a synthetic polymer, preferably a synthetic copolymer or terpolymer, said synthetic polymer having an average molecular weight higher than 1,000,000 Dalton determined via gel permeation as described in the specification and the emulsion has a viscosity of less than 1000 mPas, measured using Brookfield DV-I viscometer with spindle 2 at 12 rpm at a temperature of 30 °C.

A variety of different mixtures may be used to prepare the water-in-oil polymer emulsion of the present invention.

Suitable mixtures may include acrylamide, further monomers, water, a water-immiscible liquid, and an emulsifier. Optionally, the mixture further may comprise an inhibitor, a base (e.g., sodium hydroxide) to neutralize the acidic monomers forming the salt form of the friction reducing copolymer, an activator to initiate polymerization at a lower temperature, and an inverter. Those of ordinary skill in the art, will know the amount and type of components to include in the mixture based on a variety of factors, including the desired molecular weight and composition of copolymer and the desired initiation temperature.

### Treatment Fluids

The water-in-oil polymer emulsion may be used to provide polymer, preferably the copolymer or terpolymer, for different applications, e.g. for cosmetic application, for cleaning or washing in household and industry, for paper treatment, water and waste water treatment in municipal and industrial plants, for use in the production of oil and gas.

In this context, it was found that synthetic polymer, in particular the synthetic copolymers and/or terpolymers, prepared according to the present invention and having an average molecular weight higher than 1,000,000 Dalton, preferably higher than 3,000,000 Dalton and/or having a K-value higher than 180 (determined as 0.1 wt.-% copolymer concentration in deionized water), preferably higher than 200, are in particular suitable materials to be used in treatment fluids for the production of oil and gas from subterranean reservoir. The materials of the instant invention show improved performance especially in subterranean reservoirs. In the recovery of oil and gas, water-soluble polymers function as thickener, fluid loss additive and/or rheology modifier for treatment fluids for example in drilling, cementing, hydraulic fracturing, acidizing, conformance control and polymer flooding. Especially when pumped into the formation for polymer flooding or conformance control, the polymers exhibit superior injectivity behavior. That means that they don't block the pores of the formation. Plugging of the pores leads to increasing pumping pressure and may even provoke premature termination of the project.

Typically, the inverse polymer emulsion is used to prepare an aqueous polymer solution for different applications by releasing the polymer, preferably the copolymer or terpolymer, from the micelles to an aqueous treatment fluid. Preparing such aqueous polymer, preferably the copolymer or terpolymer, solution may comprise providing the inverse polymer emulsion and the water or aqueous solution, combining the inverse polymer emulsion with the water or aqueous solution to from the aqueous treatment fluid.

The aqueous solution may be pure or distilled water, synthetic salt water or salt water from natural, municipal or industrial sources like e.g. sea water, formation water, municipal or industrial waste water. Examples for salts dissolved in the water may include but are not limited to alkali chlorides, alkali sulfates, earth alkali chlorides, earth alkali sulfates, salts of sodium, potassium, calcium, iron, aluminium and others. The salt content of the aqueous solution may be from 0 wt.-% to 35 wt.-% of the total weight of the aqueous solution.

Furthermore, the aqueous solution may contain a variety of additives for the designed application like surfactants or stabilizers.

The concentration of the polymer, preferably the copolymer or terpolymer, in the aqueous treatment fluid is typically from 0.001 to 10 wt.-%, preferred from 0.005 to 5 wt.-% and most preferred from 0.01 to 2 wt.-%, referred to the aqueous polymer solution.

### Test Methods

The following testing methods are used:
The average molecular weight can be determined via gel permeation chromatography (GPC). Commercially available polymers, e.g. from acrylamide with molecular weight of 1,140,000 Dalton and 5,550,000 Dalton, can be used as standards. For separation of the sample a column consisting of a polyhydroxymethacrylate copolymer network with a pore volume of 30,000 Angstrom (Å) can be used.

The K-value (K) according to Fikentscher serves as indicator for the average molecular weight of the copolymers according to the invention. To determine the K-value, the copolymer was dissolved in a certain concentration (generally 0.5 wt.-%, in the instant invention 0.1 wt.-%) and the efflux time at 30 °C was determined by means of an Ubbelohde capillary viscometer. This value gives the absolute viscosity of the solution (η_{c}). The absolute viscosity of the solvent is ηₒ. The ratio of the two absolute viscosities gives the relative viscosity ηᵣₑₗ ${η}_{rel} = {η}_{c} / {η}_{o}$

From the relative viscosity, the K-value can be determined as a function of the concentration c by means of the following equations: $\begin{matrix}Log {η}_{rel} = \left[\left({75 k}^{2}/\left(1+1.5kc\right)+k\right.\right] c \\ k = K / 1000\end{matrix}$

The viscosity of inverse polymer emulsions and polymer solutions was determined using a Brookfield DV-I viscometer and an Ubbelohde capillary viscometer.

For the Ubbelohde capillary viscometer the capillary of appropriate width was chosen, about 30 ml of the sample were filled into the capillary. The capillary was then allowed to adjust temperature to 30 °C for 10 min in a water bath. The time of the defined sample volume for passing through the capillary was taken and then multiplied with the capillary constant to give the viscosity in mPa*s.

The Brookfield DV-I measures viscosities by driving a spindle which is immersed in the test fluid through a calibrated spring. Spindle and rotational speed are chosen according to the viscosity range of the test fluid. 200 ml of the fluid were placed in a heated beaker and allowed to warm to 30 °C.

The stability of polymer emulsions was determined by evaluating samples that were stored at ambient temperature for a longer period of time. The height of the organic phase that separated from the emulsion was measured and its volume was calculated. The separated organic phase was then related to the volume of the sample. The separated relative volume is given in volume % (vol.-%) related to the storage time.

The size of the aqueous droplets is determined by dynamic light scattering using a Malvern ZetaSizer NS at a scattering angle of 90 °.

The molecular weight of the alkyl polyglycoside is given by the reactant's glycoside and fatty alcohol.

HLB-values of the first and second surfactant were provided according to Griffin in which the term "HLB value" denotes the hydrophilic-lipophilic balance of a substance and thus gives information on the lipophilic or hydrophilic tendency of a substance. The higher the HLB-value, the better the hydrophilicity. The HLB value can be determined by calculating the values for the different regions of the molecule, as described by Griffin in 1949 (Griffin, William C. (1949), "Classification of Surface-Active Agents by 'HLB", Journal of the Society of Cosmetic Chemists, 1 (5): 311-26) and 1954 (Griffin, William C. (1954), "Calculation of HLB Values of Non-lonic Surfactants", Journal of the Society of Cosmetic Chemists, 5 (4): 249-56), and as described by Davies in 1957 (Davies JT (1957), "A quantitative kinetic theory of emulsion type, I. Physical chemistry of the emulsifying agent", Gas/Liquid and Liquid/Liquid Interface, Proceedings of the International Congress of Surface Activity, pp. 426-38). The HLB-value of a mixture of substances can be determined by multiplying the HLB-value of the single substance with their weight shares in the mixture and summing up the obtained values.

As a preferred reference, the HLB-value can be determined by using the Griffin's method for non-ionic surfactants as described in the paper of 1954 (Griffin, William C. (1954), "Calculation of HLB Values of Non-lonic Surfactants", Journal of the Society of Cosmetic Chemists, 5 (4): 249-56): $HLB = 20 x {M}_{h} / M$ where Mₕ is the molecular mass of the hydrophilic portion of the molecule, and M is the molecular mass of the whole molecule, giving a result on a scale of 0 to 20. An HLB value of 0 corresponds to a completely lipophilic/hydrophobic molecule, and a value of 20 corresponds to a completely hydrophilic/lipophobic molecule.

### Abbreviations

- ηₒ: Viscosity of solvent solution for K-value determination
- η_{c}: Viscosity of copolymer solution for K-value determination
- ηᵣₑₗ: Relation of η_{c} relative to ηₒ
- c: Concentration of polymer in solution, determination of K-value
- wt.-%: % by weight

### Examples

### Example 1:

20 g sorbitan sesquioleate were dissolved in 160 g C11-C16 isoparaffin. 110 g water 36 g of aqueous ammonia solution (25 %) were placed in a beaker were cooled to 5 °C, then 110 g 2-acrylamido-2-methylpropane sulfonic acid were added. The pH was adjusted to 7.1 with aqueous ammonia solution. Subsequently 146.7 g acryl amide solution (50 wt.-% in water) were added.

Under vigorous stirring the aqueous monomer solution was added to the isoparaffinic mixture. The emulsion was then purged for 45 min with nitrogen.

The polymerization was started by addition of 0.5 g azobisisobutyronitrile in 12 g isoparaffin and heated to 50 °C. To complete the reaction the temperature was increased to 80 °C and maintained at this temperature for 2 h. The polymer emulsion was cooled to ambient temperature. As product, a polymer emulsion was obtained.

The K-value was determined to be 248 as 0.1 wt.-% polymer solution in deionized water containing 0.5 wt.-% of an ethoxylated C13 alcohol having a HLB-value of > 10.

### Examples 2 to 7

Several polymer emulsions were prepared according to example 1 but solving 13 g of different hydrophilic emulsifiers with an HLB value ≥10 after the sorbitan sesquioleat in the C11-C16 isoparaffin. The chemical designation of the additional emulsifier (titled as second surfactant), its HLB-value and the resulting HLB of the emulsion is given in table 1.

**Table 1:**

| | Second surfactant | HLB emulsifier | HLB emulsion |
|---|---|---|---|
| **Ex. 1** | none | | 3.7 |
| **Ex. 2** | ethoxylated sorbitan ester | 10 | 6.2 |
| **Ex. 3** | ethoxylated sorbitan ester | 15 | 8.2 |
| **Ex. 4** | ethoxylated sorbitan ester | 11 | 6.6 |
| **Ex. 5** | dodecyl glucoside, oligomeric | 12 | 7.0 |
| **Ex. 6** | branched C10-alcohol ethoxylated | 14 | 7.8 |
| **Ex. 7** | branched C10-alcohol ethoxylated | 10 | 6.2 |

Examples 1 to 4 and 6 to 7 are comparative examples.

### Examples 8 to 14

Viscosities and stability of polymer emulsions were evaluated; the results are summarized in table 2.

**Table 2:**

| | Polymer emulsion of | K-value | Brookfield viscosity (Sp. 12, 12 rpm, 30 °C), mPas | Stability as separated volume (vol.-%) after 30 d or longer |
|---|---|---|---|---|
| **Ex. 8** | Ex. 1 | 248 | 2463 | 60 d: 2 vol.-% |
| **Ex. 9** | Ex. 2 | 242 | 665 | 40 d: 3 vol.-% |
| **Ex. 10** | Ex. 3 | - | - | 0 d: 76 vol.-% |
| **Ex. 11** | Ex. 4 | 242 | 860 | 30 d: 3 vol.-% |
| **Ex. 12** | Ex. 5 | 247 | 713 | 71 d: 7 vol.-% |
| **Ex. 13** | Ex. 6 | - | - | 0 d: 76 vol.-% |
| **Ex. 14** | Ex. 7 | - | - | 0 d: 61 vol.-% |

From these results it becomes obvious that polymer emulsions stabilized by lipophilic surfactant having a HLB-value of 3.4 are stable but exhibit high viscosity.

The addition of suitable hydrophilic surfactants having a HLB-value of > 11 gives polymer emulsions with significantly reduced viscosity. Ethoxylated sorbitane esters are among the emulsifiers. Also, alkyl glucosides are able to reduce the viscosity of the polymer emulsion without reducing its stability.

However, the results clearly show that not all hydrophilic surfactant are able to stabilize the emulsion. Ethoxylated alcohols as well as inappropriate ethoxylated sorbitan esters lead to complete separation of the emulsion within few hours.

## Claims

1. Inverse emulsion polymerization method comprising the steps of:
(i) preparation of an aqueous monomer solution, if necessary, adjusting pH value of the aforementioned monomer solution,
(ii) preparation of an organic solution consisting of a water-immiscible organic liquid that does not interfere with the polymerization reaction, said organic solution containing a surfactant package,
(iii) addition of the aqueous phase of step (i) to the organic phase of step (ii) to prepare a water-in-oil emulsion,
(iv) removal of oxygen and initiation of the polymerization reaction by addition of one or more compounds that form radicals
(v) adjusting reaction temperature by cooling or heating to allow complete conversion of the monomers into a polymer,
(vi) optionally addition of an inverter surfactant for facilitated inversion or further additives,
wherein
the water-in-oil polymer emulsions comprises at least one water-soluble polymer in the aqueous phase, the aqueous phase is dispersed in the continuous hydrophobic organic phase and the droplets of the aqueous phase are stabilized by a surfactant package containing a first surfactant having a HLB-value between 3 and 9 and a second surfactant having a HLB-value of greater than 11, said second surfactant is an alkyl polyglycoside or a mixture of alkyl polyglycosides, the water-soluble polymer is a synthetic polymer, preferably a synthetic copolymer or terpolymer, said synthetic polymer having an average molecular weight higher than 1,000,000 Dalton determined via gel permeation as described in the specification and the emulsion has a viscosity of less than 1000 mPas, measured using Brookfield DV-I viscometer with spindle 2 at 12 rpm at a temperature of 30 °C.

2. The method as claimed in claim 1, wherein the aqueous phase includes the water-soluble polymer in an amount from 40 to 90 wt.-%, preferable 60 to 75 wt.-%, based on the total emulsion.

3. The method as claimed in claim 2, wherein the polymer, preferably the copolymer or terpolymer, content of the water-in-oil emulsion is from 20 to 50 wt.-%, preferably between 25 to 35 wt.-%, based on the total emulsion.

4. The method as claimed in claim 1, 2 or 3, wherein the synthetic polymer comprises:
(I) at least structural units of formula (I) 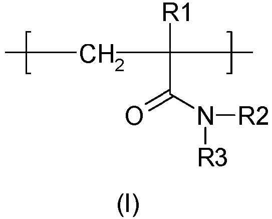 wherein
R1, R2 and R3 independently are hydrogen or C₁-C₆-alkyl,
(II) from 0 to 95 % by weight structural units of formula (II) 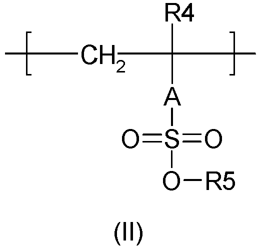 wherein
R4 is hydrogen or C₁-C₆-alkyl,
R5 is hydrogen, a cation of an alkaline metal, of an earth alkaline metal, of ammonia and/or of an organic amine,
A is a covalent C-S bond or a two-valent organic bridging group,
(III) from 0 to 30 % by weight structural units of formula (III) 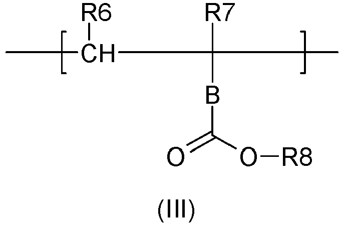 wherein
B is a covalent C-C bond or a two-valent organic bridging group
R6 and R7 are independently of one another hydrogen, C₁-C₆-alkyl, -COOR₉ or -CH₂-COOR₉, with R₉ being hydrogen, a cation of an alkaline metal, of an earth alkaline metal, of ammonia and/or of an organic amine,
R8 is hydrogen, a cation of an alkaline metal, of an earth alkaline metal, of ammonia and/or of an organic amine, or is C₁-C₆-alkyl, a group -CₙH₂ₙ-OH with n being an integer between 2 and 6, preferably 2, or is a group -CₒH₂ₒ-NR10R11, with o being an integer between 2 and 6, preferably 2, and
R10 and R11 are independently of one another hydrogen or C₁-C₆-alkyl, preferably hydrogen,
(IV) from 0 to 50 % by weight structural units of formula (IV) 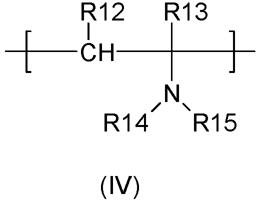 wherein
R12 and R13 are independently of one another hydrogen, C₁-C₆-alkyl, -COOR16 or -CH₂-COOR16, with
R16 being hydrogen, a cation of an alkaline metal, of an earth alkaline metal, of ammonia and/or of an organic amine,
R14 is hydrogen or, C₁-C₆-alkyl, and
R15 is -COH, -CO-C₁-C₆-alkyl or
R14 and R15 together with the nitrogen atom to which they are attached form a heterocyclic group with 4 to 6 ring atoms, preferably a pyridine ring, a pyrrolidone ring or a caprolactame ring,
(V) from 0 to 20 % by weight structural units of formula (V) 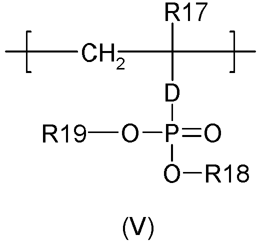 wherein
D is a covalent C-P bond or a two-valent organic bridging group
R17 is hydrogen or, C₁-C₆-alkyl, and
R18 and R19 are independently of one another hydrogen, a cation of an alkaline metal, of an earth alkaline metal, of ammonia and/or of an organic amine,
B is a covalent C-P bond or a two-valent organic bridging group,
(VI) optionally further copolymerisable monomers, such copolymerisable monomers being present from 0 to 20 % by weight structural units,
with the proviso that the percentage of the structural units of formulae (I) to (VI), preferably the structural units of formulae (I) to (V), refer to the total mass of the copolymer and the percentage of the structural units of formulae (I) to (VI), preferably the structural units of formulae (I) to (V), amounts to 100%.

5. The method as claimed in claim 4, wherein the synthetic copolymer is selected from the group consisting of polymers containing:
(I) 10 to 90 % by weight of structural formula I, preferred from 20 to 70 % by weight,
(II) 0 to 95 % by weight of structural formula II, preferred from 10 to 80 % by weight, more preferred from 20 to 60 % by weight,
(III) 0 to 30 % by weight of structural formula III, preferred from 0 to 20 % by weight, more preferred 0.1 to 1% by weight,
(IV) 0 to 50 % by weight of structural formula IV, preferred from 0 to 20 % by weight, more preferred from 0.1 to 10 % by weight,
(V) 0 to 20 % by weight of structural formula V, preferred from 0.1 to 10 % by weight,
referred to the total mass of the polymer, with the proviso that the percentage of the structural units of formulae (I) to (V) refer to the total mass of the copolymer and the percentage of the structural units of formulae (I) to (V) amounts to 100 %.

6. The method as claimed in one or more of claims 1 to 5, wherein the average molecular weight of the polymer is higher than 3,000,000 Dalton.

7. The method as claimed in one or more of claims 1 to 6, wherein the alkyl polyglycoside(s) have a molecular weight of less than 950 g/mol.

8. The method as claimed in one or more of claims 1 to 7, wherein the alkyl polyglycoside(s) consist of 1 to 5 glycoside units, preferred of 1 to 3 glycoside units, most preferred 1 or 2 glycoside units.

9. The method as claimed in one or more of claims 1 to 8, wherein the alkyl side chain of the alkyl polyglycoside(s) consists of alkyl groups with an uniform number of up to 12 C-atoms or different length with up to 16 C-atoms.

10. The method as claimed in one or more of claims 1 to 9, wherein the alkyl polyglycoside(s) are octyl - to dodecyl polyglucosides having 1 to 3 glucoside units and mixtures thereof.

11. The method as claimed in one or more of claims 1 to 10, wherein the total amount of first and second surfactant(s) ranges from 0.6 to 10 wt.-%, preferably from 1 to 9 wt.-%, of the total emulsion.

12. The method as claimed in one or more of claims 1 to 11, wherein the ratio of the first and the second surfactant may vary between 0.5 to 1 and 8 to 1, preferably between 1 to 1and 4 to 1.

13. The method as claimed in one or more of claims 1 to 12, wherein the first surfactant is present in an amount in the range of from about 0.5 wt.-% to about 6 wt.-% of the total emulsion and the second surfactant is present in an amount in the range of from about 0.1 wt.-% to about 4 wt.-% of the total emulsion, the ratio of the first and the second surfactant is between 0.5 to 1 and 8 to 1, preferably between 1 to 1 and 4 to 1.

## Patentansprüche

1. Verfahren zur inversen Emulsionspolymerisation, das die folgenden Schritte umfasst:
(i) Herstellen einer wässrigen Monomerlösung, gegebenenfalls Einstellen des pH-Werts der genannten Monomerlösung,
(ii) Herstellen einer organischen Lösung, die aus einer mit Wasser nicht mischbaren organischen Flüssigkeit besteht, die die Polymerisationsreaktion nicht stört, wobei die organische Lösung ein Tensidpaket enthält,
(iii) Zugeben der wässrigen Phase aus Schritt (i) zu der organischen Phase aus Schritt (ii), um eine Wasser-in-Öl-Emulsion herzustellen,
(iv) Entfernen von Sauerstoff und Einleiten der Polymerisationsreaktion durch das Zugeben einer oder mehrerer Verbindungen, die Radikale bilden,
(v) Einstellen der Reaktionstemperatur durch Kühlen oder Erhitzen, um die vollständige Umwandlung der Monomere zu einem Polymer zu ermöglichen,
(vi) gegebenenfalls Zugeben eines Inverter-Tensids zur Erleichterung der Inversion oder weiterer Zusatzstoffe,
wobei
die Wasser-in-Öl-Polymeremulsionen mindestens ein wasserlösliches Polymer in der wässrigen Phase umfassen, die wässrige Phase in der kontinuierlichen hydrophoben organischen Phase dispergiert ist, und die Tröpfchen der wässrigen Phase durch ein Tensidpaket, das ein erstes Tensid mit einem HLB-Wert zwischen 3 und 9 und ein zweites Tensid mit einem HLB-Wert von mehr als 11 enthält, stabilisiert werden, wobei das zweite Tensid ein Alkylpolyglykosid oder eine Mischung aus Alkylpolyglykosiden ist, das wasserlösliche Polymer ein synthetisches Polymer ist, vorzugsweise ein synthetisches Copolymer oder Terpolymer, wobei das synthetische Polymer ein durchschnittliches Molekulargewicht von mehr als 1.000.000 Dalton aufweist, bestimmt mittels Gelpermeation wie in der Beschreibung beschrieben, und die Emulsion eine Viskosität von weniger als 1000 mPas aufweist, gemessen mit einem Brookfield DV-I-Viskosimeter mit Spindel 2 bei 12 U/min und einer Temperatur von 30 °C.

2. Verfahren nach Anspruch 1, wobei die wässrige Phase das wasserlösliche Polymer in einer Menge von 40 bis 90 Gew.-%, vorzugsweise 60 bis 75 Gew.-%, bezogen auf die gesamte Emulsion, enthält.

3. Verfahren nach Anspruch 2, wobei der Polymergehalt, vorzugsweise der Copolymer- oder Terpolymergehalt, der Wasser-in-Öl-Emulsion 20 bis 50 Gew.-%, vorzugsweise 25 bis 35 Gew.-%, bezogen auf die gesamte Emulsion, beträgt.

4. Verfahren nach Anspruch 1, 2 oder 3, wobei das synthetische Polymer Folgendes umfasst:
(I) mindestens Struktureinheiten der Formel (I) 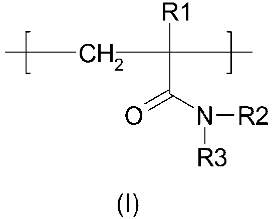 wobei
R1, R2 und R3 unabhängig voneinander Wasserstoff oder C₁-C₆-Alkyl sind,
(II) 0 bis 95 Gew.-% Struktureinheiten der Formel (II) 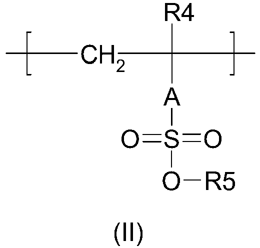 wobei
R4 Wasserstoff oder C₁-C₆-Alkyl ist,
R5 Wasserstoff, ein Kation eines Alkalimetalls, eines Erdalkalimetalls, von Ammoniak und/oder eines organischen Amins ist,
A eine kovalente C-S-Bindung oder eine zweibindige organische Brückengruppe ist,
(III) 0 bis 30 Gew.-% Struktureinheiten der Formel (III) 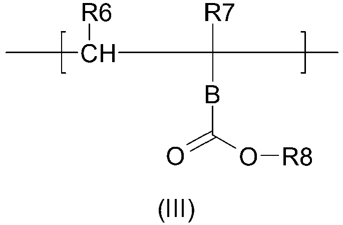 wobei
B eine kovalente C-C-Bindung oder eine zweibindige organische Brückengruppe ist,
R6 und R7 unabhängig voneinander Wasserstoff, C₁-C₆-Alkyl, -COOR₉ oder -CH₂-COOR₉ sind, wobei R₉ Wasserstoff, ein Kation eines Alkalimetalls, eines Erdalkalimetalls, von Ammoniak und/oder eines organischen Amins ist,
R8 Wasserstoff, ein Kation eines Alkalimetalls, eines Erdalkalimetalls, von Ammoniak und/oder eines organischen Amins oder C₁-C₆-Alkyl, eine -CₙH₂ₙ-OH-Gruppe, wobei n eine ganze Zahl zwischen 2 und 6, vorzugsweise 2, ist, oder eine -CₒH₂ₒ-NR10R11-Gruppe ist, wobei o eine ganze Zahl zwischen 2 und 6, vorzugsweise 2, ist, und
R10 und R11 unabhängig voneinander Wasserstoff oder C₁-C₆-Alkyl, vorzugsweise Wasserstoff, sind,
(IV) 0 bis 50 Gew.-% Struktureinheiten der Formel (IV) 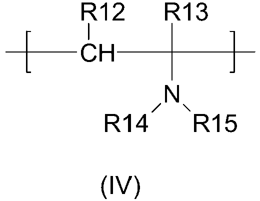 wobei
R12 und R13 unabhängig voneinander Wasserstoff, C₁-C₆-Alkyl, -COOR16 oder -CH₂-COOR16 sind, wobei
R16 Wasserstoff, ein Kation eines Alkalimetalls, eines Erdalkalimetalls, Ammoniak und/oder eines organischen Amins ist,
R14 Wasserstoff oder C₁-C₆-Alkyl ist, und
R15 -COH, -CO-C₁-C₆-alkyl ist, oder
R14 und R15 zusammen mit dem Stickstoffatom, an das sie gebunden sind, eine heterocyclische Gruppe mit 4 bis 6 Ringatomen, vorzugsweise einen Pyridinring, einen Pyrrolidonring oder einen Caprolactamring, bilden,
(V) 0 bis 20 Gew.-% Struktureinheiten der Formel (V) 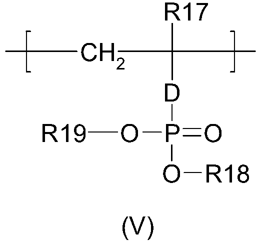 wobei
D eine kovalente C-P-Bindung oder eine zweibindige organische Brückengruppe ist,
R17 Wasserstoff oder C₁-C₆-Alkyl ist, und
R18 und R19 unabhängig voneinander Wasserstoff, ein Kation eines Alkalimetalls, eines Erdalkalimetalls, von Ammoniak und/oder eines organischen Amins sind,
B eine kovalente C-P-Bindung oder eine zweibindige organische Brückengruppe ist,
(VI) gegebenenfalls weitere copolymerisierbare Monomere, wobei diese copolymerisierbaren Monomere in einer Menge von 0 bis 20 Gew.-% Struktureinheiten vorliegen,
mit der Maßgabe, dass sich der prozentuale Anteil der Struktureinheiten der Formeln (I) bis (VI), vorzugsweise der Struktureinheiten der Formeln (I) bis (V), auf die Gesamtmasse des Copolymers bezieht und der prozentuale Anteil der Struktureinheiten der Formeln (I) bis (VI), vorzugsweise der Struktureinheiten der Formeln (I) bis (V), 100 % beträgt.

5. Verfahren nach Anspruch 4, wobei das synthetische Copolymer aus der Gruppe ausgewählt ist, die aus Polymeren besteht, die Folgendes enthalten:
(I) 10 bis 90 Gew.-% der Strukturformel I, vorzugsweise 20 bis 70 Gew.-%,
(II) 0 bis 95 Gew.-% der Strukturformel II, vorzugsweise 10 bis 80 Gew.-%, noch bevorzugter 20 bis 60 Gew.-%,
(III) 0 bis 30 Gew.-% der Strukturformel III, vorzugsweise 0 bis 20 Gew.-%, noch bevorzugter 0,1 bis 1 Gew.-%,
(IV) 0 bis 50 Gew.-% der Strukturformel IV, vorzugsweise 0 bis 20 Gew.-%, noch bevorzugter 0,1 bis 10 Gew.-%,
(V) 0 bis 20 Gew.-% der Strukturformel V, vorzugsweise 0,1 bis 10 Gew.-%, bezogen auf die Gesamtmasse des Polymers, mit der Maßgabe, dass sich der prozentuale Anteil der Struktureinheiten der Formeln (I) bis (V) auf die Gesamtmasse des Copolymers bezieht und der prozentuale Anteil der Struktureinheiten der Formeln (I) bis (V) 100 % beträgt.

6. Verfahren nach einem oder mehreren der Ansprüche 1 bis 5, wobei das durchschnittliche Molekulargewicht des Polymers höher als 3.000.000 Dalton ist.

7. Verfahren nach einem oder mehreren der Ansprüche 1 bis 6, wobei das bzw. die Alkylpolyglykoside ein Molekulargewicht von weniger als 950 g/mol aufweisen.

8. Verfahren nach einem oder mehreren der Ansprüche 1 bis 7, wobei das bzw. die Alkylpolyglykoside aus 1 bis 5 Glykosideinheiten, vorzugsweise aus 1 bis 3 Glykosideinheiten und am bevorzugtesten aus 1 oder 2 Glykosideinheiten bestehen.

9. Verfahren nach einem oder mehreren der Ansprüche 1 bis 8, wobei die Alkylseitenkette des bzw. der Alkylpolyglykoside aus Alkylgruppen mit einer einheitlichen Anzahl von bis zu 12 C-Atomen oder unterschiedlicher Länge mit bis zu 16 C-Atomen besteht.

10. Verfahren nach einem oder mehreren der Ansprüche 1 bis 9, wobei es sich bei dem bzw. den Alkylpolyglykosiden um Octyl- bis Dodecylpolyglykoside mit 1 bis 3 Glukosideinheiten und Mischungen davon handelt.

11. Verfahren nach einem oder mehreren der Ansprüche 1 bis 10, wobei die Gesamtmenge des ersten und des zweiten Tensids bzw. der ersten und der zweiten Tenside 0,6 bis 10 Gew.-%, vorzugsweise 1 bis 9 Gew.-%, der gesamten Emulsion beträgt.

12. Verfahren nach einem oder mehreren der Ansprüche 1 bis 11, wobei das Verhältnis des ersten zum zweiten Tensid zwischen 0,5:1 und 8:1, vorzugsweise zwischen 1:1 und 4:1, variieren kann.

13. Verfahren nach einem oder mehreren der Ansprüche 1 bis 12, wobei das erste Tensid in einer Menge im Bereich von etwa 0,5 Gew.-% bis etwa 6 Gew.-% der gesamten Emulsion vorliegt und das zweite Tensid in einer Menge im Bereich von etwa 0,1 Gew.-% bis etwa 4 Gew.-% der gesamten Emulsion vorliegt, wobei das Verhältnis des ersten zum zweiten Tensid zwischen 0,5:1 und 8:1, vorzugsweise zwischen 1:1 und 4:1, liegt.

## Revendications

1. Procédé de polymérisation en émulsion inverse comprenant les étapes suivantes :
(i) préparation d'une solution aqueuse de monomère, si nécessaire, ajustement de la valeur du pH de la solution de monomère susmentionnée,
(ii) préparation d'une solution organique constituée d'un liquide organique non miscible à l'eau qui n'interfère pas avec la réaction de polymérisation, ladite solution organique contenant un ensemble de tensioactifs,
(iii) ajout de la phase aqueuse de l'étape (i) à la phase organique de l'étape (ii) pour préparer une émulsion d'eau dans l'huile,
(iv) élimination de l'oxygène et initiation de la réaction de polymérisation par l'ajout d'un ou plusieurs composés formant des radicaux,
(v) ajustement de la température de réaction par refroidissement ou chauffage pour permettre la conversion complète des monomères en un polymère,
(vi) ajout éventuel d'un agent tensioactif d'inversion pour faciliter l'inversion ou d'autres additifs,
dans lequel
les émulsions polymères de type « eau dans l'huile » comprennent au moins un polymère hydrosoluble dans la phase aqueuse, la phase aqueuse est dispersée dans la phase organique hydrophobe continue et les gouttelettes de la phase aqueuse sont stabilisées par un ensemble de tensioactifs comprenant un premier tensioactif ayant une valeur HLB comprise entre 3 et 9 et un deuxième tensioactif ayant une valeur HLB supérieure à 11, ledit deuxième tensioactif est un alkylpolyglycoside ou un mélange d'alkylpolyglycosides, le polymère hydrosoluble est un polymère synthétique, de préférence un copolymère ou un terpolymère synthétique, ledit polymère synthétique ayant un poids moléculaire moyen supérieur à 1 000 000 daltons, déterminé par perméation sur gel comme décrit dans le mémoire descriptif, et l'émulsion présente une viscosité inférieure à 1 000 mPas, mesurée à l'aide d'un viscosimètre Brookfield DV-I avec le mobile n° 2 à 12 tr/min à une température de 30 °C.

2. Procédé selon la revendication 1, dans lequel la phase aqueuse comprend le polymère hydrosoluble en une quantité comprise entre 40 et 90 % en poids, de préférence entre 60 et 75 % en poids, par rapport à l'émulsion totale.

3. Procédé selon la revendication 2, dans lequel la teneur en polymère, de préférence en copolymère ou en terpolymère, de l'émulsion eau dans l'huile est comprise entre 20 et 50 % en poids, de préférence entre 25 et 35 % en poids, par rapport à l'émulsion totale.

4. Procédé selon la revendication 1, 2 ou 3, dans lequel le polymère synthétique comprend :
(I) au moins des unités structurelles de la formule (I) 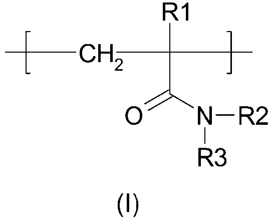 dans lequel
R1, R2 et R3 représentent indépendamment l'hydrogène ou C₁-C₆-alkyle,
(II) de 0 à 95 % en poids d'unités structurelles de la formule (II) 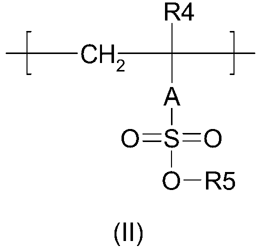 dans lequel
R4 est de l'hydrogène ou un C₁-C₆-alkyle,
R5 est de l'hydrogène, un cation d'un métal alcalin, d'un métal alcalino-terreux, de l'ammoniaque et/ou d'une amine organique,
A est une liaison covalente C-S ou un groupe de liaison organique à deux valences,
(III) de 0 à 30 % en poids d'unités structurelles de la formule (III) 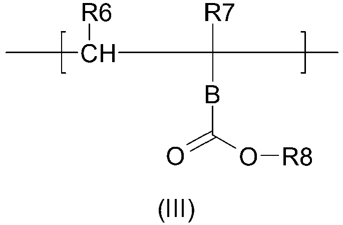 dans lequel
B est une liaison covalente C-C ou un groupe de liaison organique à deux valences
R6 et R7 sont indépendamment l'un de l'autre de l'hydrogène, C₁-C₆-alkyle, -COOR₉ ou -CH₂-COOR₉, R₉ étant de l'hydrogène, un cation d'un métal alcalin, d'un métal alcalino-terreux, de l'ammoniaque et/ou d'une amine organique,
R8 est l'hydrogène, un cation d'un métal alcalin, d'un métal alcalino-terreux, de l'ammoniaque et/ou d'une amine organique, ou est C₁-C₆-alkyle, un groupe -CₙH₂ₙ-OH, n étant un nombre entier entre 2 et 6, de préférence 2, ou est un groupe -CₒH₂ₒ-NR10R11, o étant un nombre entier entre 2 et 6, de préférence 2, et
R10 et R11 sont indépendamment l'un de l'autre de l'hydrogène ou C₁-C₆-alkyle, de préférence de l'hydrogène,
(IV) de 0 à 50 % en poids d'unités structurelles de la formule (IV) 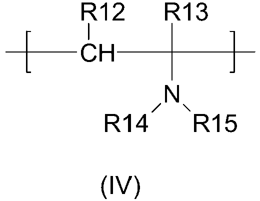 dans lequel
R12 et R13 sont indépendamment l'un de l'autre de l'hydrogène, C₁-C₆-alkyle, -COOR16 ou -CH₂-COOR16, avec
R16 étant de l'hydrogène, un cation d'un métal alcalin, d'un métal alcalino-terreux, de l'ammoniaque et/ou d'une amine organique,
R14 représente l'hydrogène ou C₁-C₆-alkyle, et
R15 est -COH, -CO-C₁-C₆-alkyle ou
R14 et R15 forment, avec l'atome d'azote auquel ils sont attachés, un groupe hétérocyclique de 4 à 6 atomes d'anneau, de pré- férence un anneau pyridine, un anneau pyrrolidone ou un anneau de caprolactame,
(V) de 0 à 20 % en poids d'unités structurelles de la formule (V) 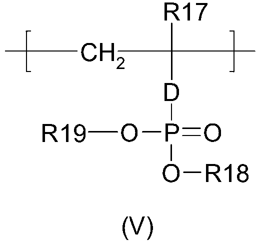 dans lequel
D est une liaison covalente C-P ou un groupe de liaison organique à deux valences
R17 représente l'hydrogène ou C₁-C₆-alkyle, et
R18 et R19 sont indépendamment l'un de l'autre de l'hydrogène, un cation d'un métal alcalin, d'un métal alcalino-terreux, de l'ammoniaque et/ou d'une amine organique,
B est une liaison covalente C-P ou un groupe de liaison organique à deux valences,
(VI) éventuellement d'autres monomères copolymérisables, ces monomères copolymérisables étant présents à raison de 0 à 20 % en poids d'unités structurelles,
à condition que le pourcentage des unités structurelles des formules (I) à (VI), de préférence les unités structurelles des formules (I) à (V), se réfère à la masse totale du copolymère et que le pourcentage des unités structurelles des formules (I) à (VI), de préférence les unités structurelles des formules (I) à (V), s'élève à 100 %.

5. Procédé selon la revendication 4, dans lequel le copolymère synthétique est choisi parmi le groupe constitué de polymères contenant :
(I) 10 à 90 % en poids de la formule structurale I, de préférence de 20 à 70 % en poids,
(II) 0 à 95 % en poids de la formule structurale II, de préférence de 10 à 80 % en poids, et de manière encore préférée de 20 à 60 % en poids,
(III) 0 à 30 % en poids de la formule structurale III, de préférence de 0 à 20 % en poids, et de manière encore préférée de 0,1 à 1 % en poids,
(IV) 0 à 50 % en poids de la formule structurale IV, de préférence de 0 à 20 % en poids, et de manière encore préférée de 0,1 à 10 % en poids,
(V) 0 à 20 % en poids de la formule structurale V, de préférence de 0,1 à 10 % en poids,
en référence à la masse totale du polymère et pourvu que le pourcentage des unités structurelles des formules (I) à (V) fasse référence à la masse totale du copolymère et que le pourcentage des unités structurelles des formules (I) à (V) s'élève à 100 %.

6. Procédé selon l'une ou plusieurs des revendications 1 à 5, dans lequel le poids moléculaire moyen du polymère est supérieur à 3 000 000 daltons.

7. Procédé selon l'une ou plusieurs des revendications 1 à 6, **caractérisé en ce que** le ou les alkylpolyglycosides ont un poids moléculaire inférieur à 950 g/mol.

8. Procédé selon l'une ou plusieurs des revendications 1 à 7, dans lequel le ou les alkylpolyglycosides sont constitués de 1 à 5 unités glycosidiques, de préférence de 1 à 3 unités glycosidiques, et de manière encore préférée de 1 ou 2 unités glycosidiques.

9. Procédé selon l'une ou plusieurs des revendications 1 à 8, dans lequel la chaîne latérale alkyle du ou des alkylpolyglycosides est constituée de groupes alkyle présentant un nombre uniforme d'atomes de carbone allant jusqu'à 12, ou de longueurs différentes allant jusqu'à 16 atomes de carbone.

10. Procédé selon l'une ou plusieurs des revendications 1 à 9, dans lequel le ou les alkylpolyglycosides sont des polyglucosides d'octyle à dodécyle comportant 1 à 3 unités glycosidiques, ainsi que leurs mélanges.

11. Procédé selon l'une ou plusieurs des revendications 1 à 10, dans lequel la quantité totale du ou des premiers et deuxièmes tensioactifs est comprise entre 0,6 et 10 % en poids, de préférence entre 1 et 9 % en poids, de l'émulsion totale.

12. Procédé selon l'une ou plusieurs des revendications 1 à 11, dans lequel le rapport entre le premier et le deuxième tensioactif peut varier entre 0,5:1 et 8:1, de préférence entre 1:1 et 4:1.

13. Procédé selon l'une ou plusieurs des revendications 1 à 12, dans lequel le premier tensioactif est présent en une quantité comprise entre environ 0,5 % en poids à environ 6 % en poids de l'émulsion totale et le deuxième tensioactif est présent en une quantité comprise entre environ 0,1 % en poids à environ 4 % en poids de l'émulsion totale, le rapport entre le premier et le deuxième tensioactif étant compris entre 0,5:1 et 8:1, de préférence entre 1:1 et 4:1.
